# EUROPEAN PATENT APPLICATION

(11) **EP 1 452 361 A2**
(43) Date of publication of application: **01.09.2004**
(21) Application number: 04004547.8
(22) Date of filing: 27.02.2004
(51) Int. Cl.: B60J 5/04

(54) **Vehicle door closing device**

(30) Priority: 28.02.2003 JP 2003054046
(71) Applicant: Aisin Seiki Kabushiki Kaisha, Kariya-shi, Aichi-ken, 448-8650 (JP)
(72) Inventor: Ishihara, Hiroshi, Anjo-shi Aichi-ken (JP); Koike, Tusneyuki, Anjo-shi Aichi-ken (JP); Tani, Akira, Anjo-shi Aichi-ken (JP); Oda, Toshitsugu, Okazaki-shi Aichi-ken (JP); Kobayashi, Tsutomu, Toyohashi-shi Aichi-ken (JP)
(74) Representative: Vollnhals, Aurel

(57) **Abstract**

In a door closing device, a cancel mechanism releasing a latch from the full-latch corresponding condition and disconnecting a latch lever from the driving source by an opening operation of a door handle, a first control means controlling the driving source generating a drive force in the positive direction while a full-latch operation engaging with a striker at the full-latch corresponding position thereof, and a second control means controlling the driving source to rotate in the reverse direction after the full-latch operation is finished by the latch lever, wherein the operation amount of the driving source in the reverse direction by the second control means is set to be smaller than the operation amount required to rotate the latch lever from the waiting condition thereof to the rotation end condition.

## Description

### FIELD OF THE INVENTION

This invention generally relates to a door closing device for changing the vehicle door condition from a half closed condition into a fully closed condition. More particularly, the present invention pertains to a door closing device pulling a striker from a half-latch corresponding position into a full-latch corresponding position.

### BACKGROUND OF THE INVENTION

A known door closing device basically includes a latch engagable with a striker, a latch lever (or a closing lever) for rotating the latch, and a pawl for retaining the latch at a full-latch corresponding condition.

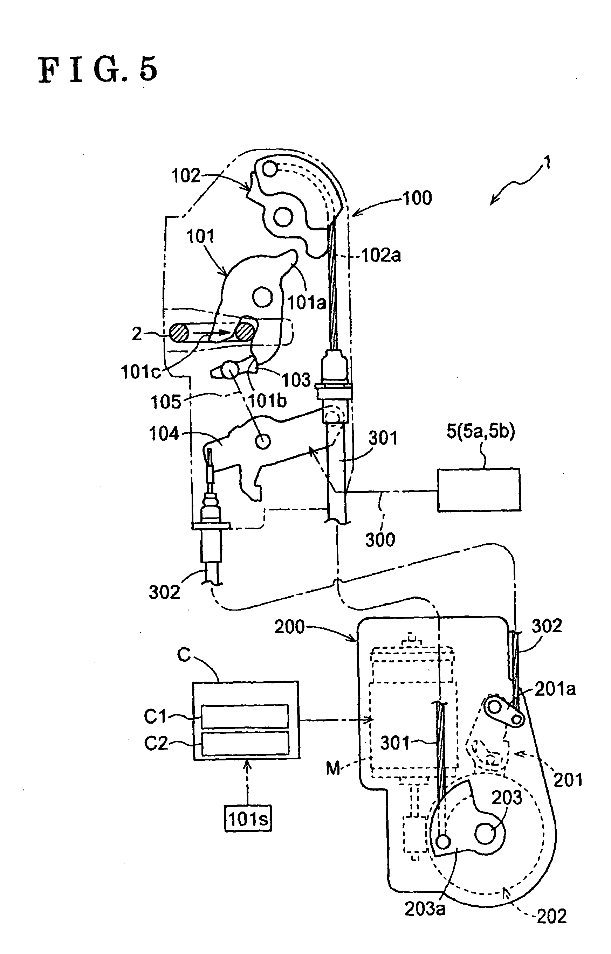

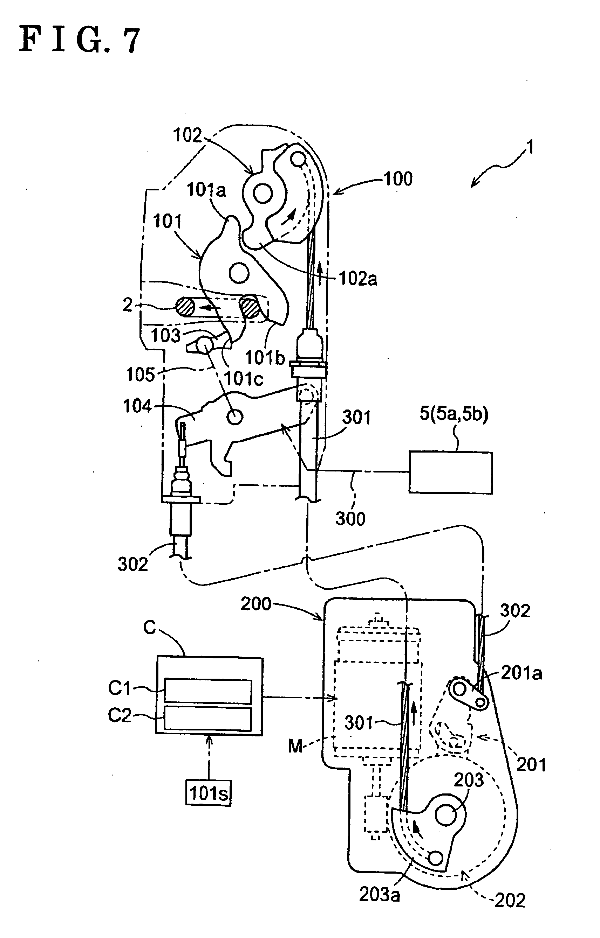

An operation of the door closing device will be explained hereinbelow based on Fig.5 and Fig.7. The position of the striker 2 relative to the closing device 1 shown in Fig.7 is a full-latch corresponding position, and the position of the striker 2 relative to the closing device 1 shown in Fig.7 is a half-latch corresponding position.

Once a vehicle door is manually operated, the striker 2 is held to the half-latch corresponding position thereof, then the striker 2 is held to the full-latch corresponding position thereof and maintained thereat by the operation of the door closing device 1. On this account, a form of an engaging portion of the latch 101 at which the striker 2 is engaged is a unique U-shaped form.

The lath 101 is set in a half-latch corresponding condition relative to the half-latch corresponding position the striker 2 or in the full-latch corresponding condition relative to the full-latch corresponding position of the striker 2. The pawl 101 retains the latch 101 in the full-lath corresponding condition.

A latch lever 102 is provided relative to the latch 101 for rotating the latch from the half-latch corresponding condition to the full-latch corresponding condition. The latch lever 102 is rotated form a waiting condition thereof as shown in Fig.5 (an original condition) to a rotation end condition thereof. Fig.6 shows the rotation end condition of the latch lever 102, and the Fig.7 shows the condition where the latch lever 102 is slightly restored from the rotation end condition to the waiting condition side.

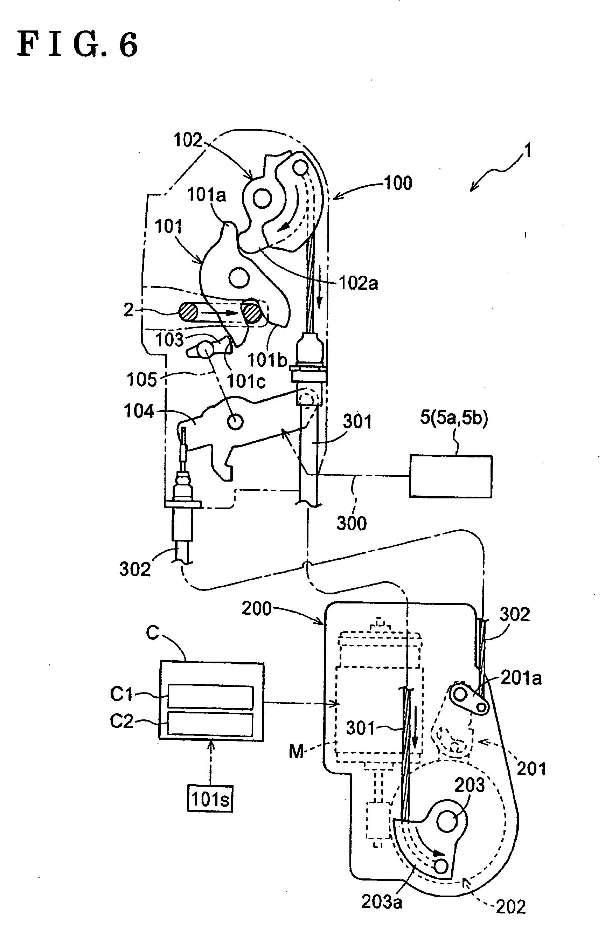

There is no significant difference between the condition where the latch lever 102 is in the rotation end condition and the condition where the latch lever 102 is slightly restored from the rotation end condition to the waiting condition side, so that both conditions of the latch 101 are called the full-latch corresponding condition. In the former condition, however, the latch 101 is maintained by the latch lever 102 as shown in Fig.6, and in later condition, the latch 101 is maintained by the pawl 103 as shown in Fig.7.

The latch 101 is rotated in the opposite direction by a biasing means like a spring provided at the latch 101 when the pawl 103 releases the latch 101.

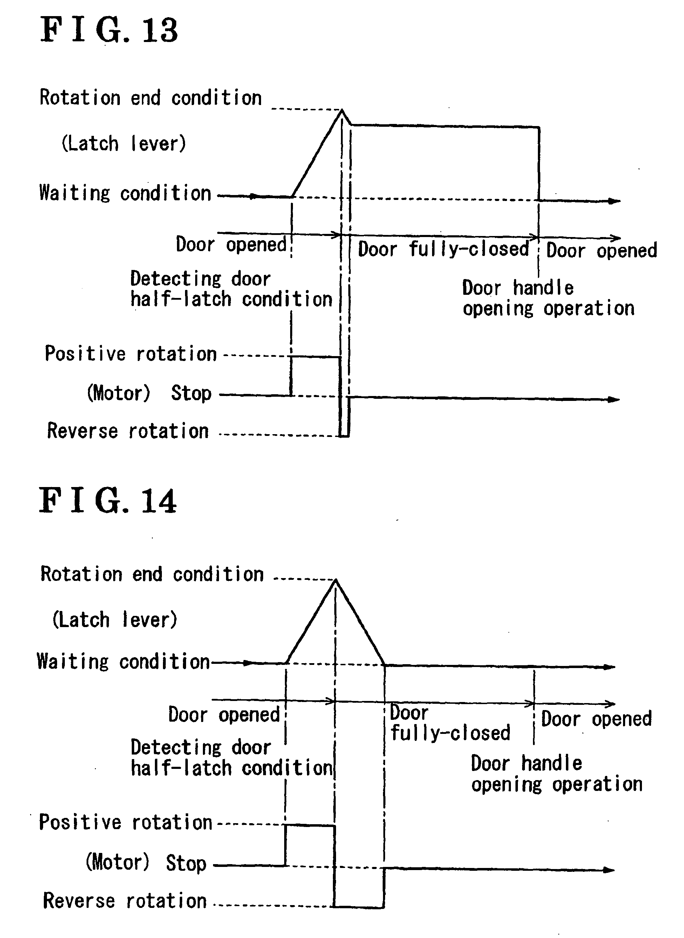

A known latch lever is rotated by a rotation of a motor provided separately. As shown in Fig.14, for example, when a motor rotates in a position direction, the latch lever is rotated form the waiting condition thereof to the rotation end condition thereof. On the other hand, when the motor rotates in a reverse direction, the latch is restored from the rotation end condition thereof to the waiting condition thereof. Thus, when the latch lever is rotated form the waiting condition thereof to the rotation end condition thereof, the latch being in the half-latch corresponding condition thereof is rotated toward the full-latch corresponding condition thereof, as a result, the striker is held inside the latch mechanism.

According to the known door closing device, the latch lever is restored to the waiting condition thereof (original condition) right after the latch is rotated to the full-latch corresponding condition as shown in Fig.14. In other words, when the condition of the vehicle door is changed from a half-latch corresponding condition to a full-latch corresponding condition, the motor rotates to restore the latch lever to the waiting condition thereof regardless of the door is fully closed (e.g. Japanese Patent Publication published as H07(1995)-39784).

In the Japanese Patent Publication published as H07(1995)-39784, a member for rotating the latch from the waiting condition thereof to the full-latch corresponding condition thereof is called a closing lever, however, a latch lever of the current invention at the close side operates same operation as the closing lever.

As described in the Japanese Patent Publication published as H07(1995)-39784, the reason why such closing operation is needed is to prevent that the stop positions which may also be next start positions of the closing lever differs. If such stop positions of the closing lever differs, next operating position is changed, as a result, a malfunction or an operation failure may occur. In such configuration, the closing lever needs extra space for its rotation, as a result, the door closing device becomes large.

In this configuration, when the door closing operation has been finished, and passenger is seated on a vehicle seat, the motor provided at the door closing device rotates only for restoring the latch lever to the waiting condition thereof, as a result, the motor noise won't stop for a while after the door closing operation is finished.

An applicant of the current invention discloses, for example, a configuration in which the conduction of the drive from the motor to the latch lever is cut by the operation of the handle lever to open when the latch changes its condition from the half-latch corresponding condition to the full-latch corresponding condition by the door closing device, or when the door is fully closed, as a result, the latch lever becomes free (Refer to Japanese Patent Laid-Open Publication published as 2002-250165). It is preferable that such configuration is effectively used to prevent aforementioned disadvantage such as the motor noise.

The present invention therefore seeks to provide a door closing device preventing the unnecessary motor noise and the like when the striker is fully engaged with the latch at the full-latch corresponding condition thereof, in other words, the door is fully closed.

### SUMMARY OF THE INVENTION

A door closing device includes a latch being rotatable between a half-latch condition thereof at which the latch is engaging with a striker at a position corresponding to the half-latch condition of the latch and a full-latch condition thereof at which the latch is engaging with a striker at a position corresponding to the full-latch condition of the latch, and biased toward the half-latch corresponding condition side thereof, a latch lever maintaining the latch at the full-latch condition, being rotatable between a waiting condition thereof corresponding to the half-latch corresponding condition of the latch and a rotation end condition thereof relative to the full-latch condition of the latch, biased toward the waiting condition side, and having a rotation limit at the waiting condition thereof on a waiting side, a driving source for generating a drive force in a positive or a reverse direction based on an operation from a control device, a drive connecting mechanism driven by the drive force of the driving source for rotating the latch lever from the waiting condition to the rotation end condition or from the rotation end condition to the waiting condition based on the direction of the driving source, the latch rotated from the half-latch corresponding condition thereof to the full-latch corresponding condition thereof by the rotation of the latch lever from the waiting condition thereof to the rotation end condition thereof characterized in that the door closing device further includes a cancel mechanism releasing the latch from the full-latch corresponding condition and disconnecting the latch lever from the driving source by an opening operation of a door handle, a first control means controlling the driving source generating the drive force in the positive direction while a full-latch operation engaging with the striker at the full-latch corresponding position thereof, and a second control means controlling the driving source to rotate in the reverse direction after the full-latch operation is finished by the latch lever, wherein the operation amount of the driving source in the reverse direction by the second control means is set to be smaller than the operation amount required to rotate the latch lever from the waiting condition thereof to the rotation end condition thereof.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements and wherein:

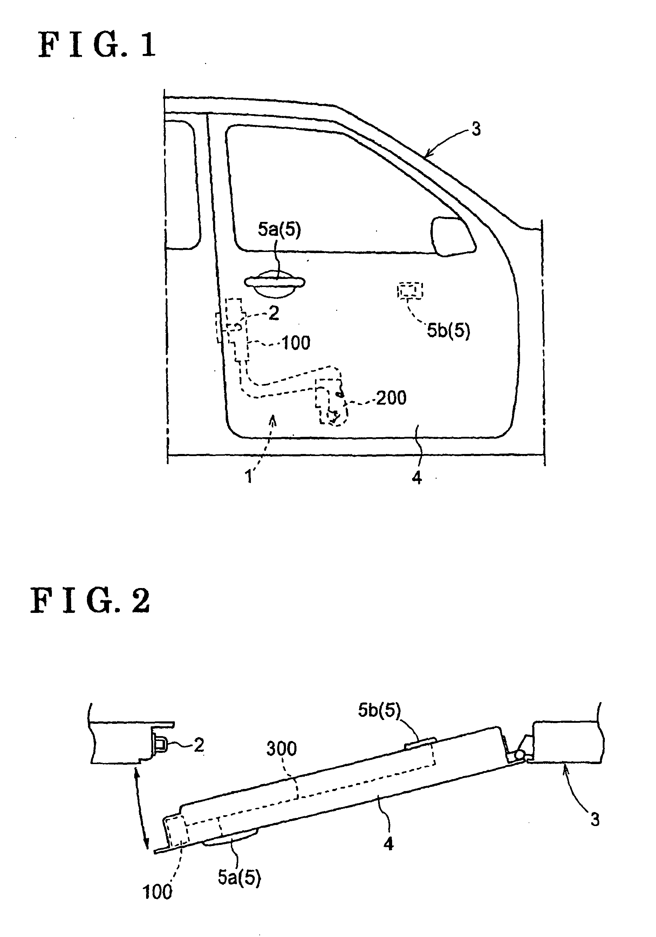

Fig.1 illustrates a front view showing a configuration of essential components of a vehicle at which a door closing device according to the current invention is provided;
Fig.2 illustrates a flat view showing a configuration of essential components of the vehicle at which the door closing device according to the current invention is provided;

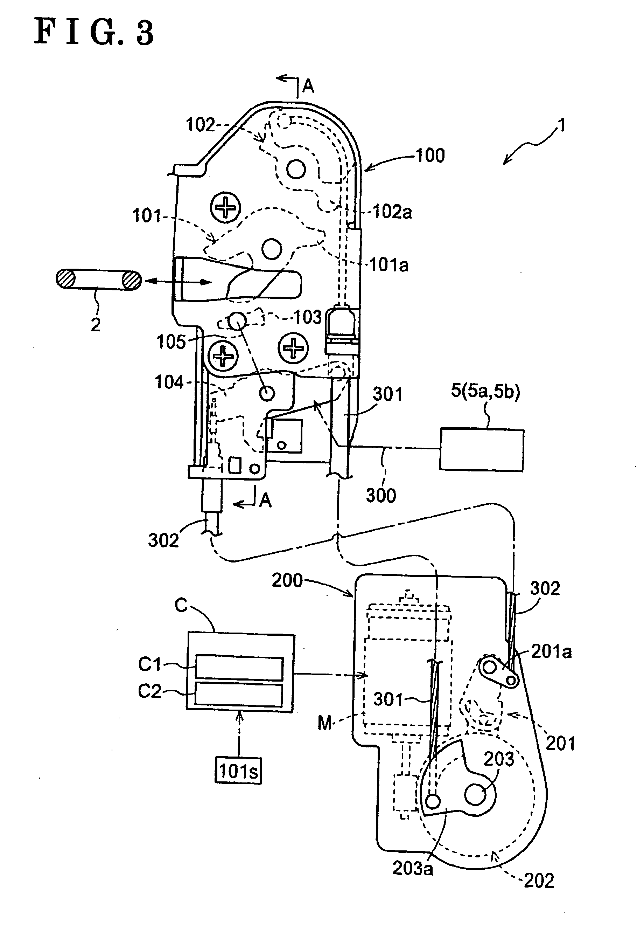

Fig.3 illustrates an explanation view indicating a relationship among essential components of the door closing device in which the striker is disengaging;

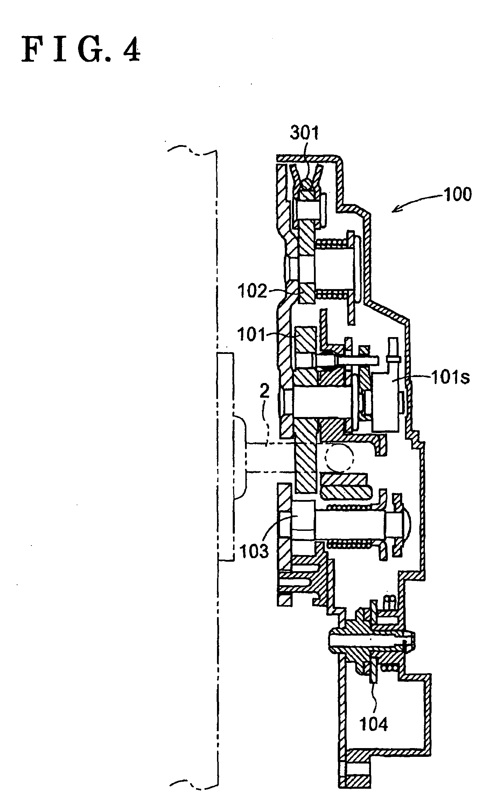

Fig.4 illustrates a cross sectional view of a latch mechanism main unit;
Fig. 5 illustrates an explanation view indicating a relationship among essential components of the door closing device upon the door half-latch condition;
Fig.6 illustrates an explanation view indicating a relationship among essential components of the door closing device in which a latch lever reaches a rotation end condition;
Fig.7 illustrates an explanation view indicating a relationship among the essential components of the door closing device in which the door is fully closed;

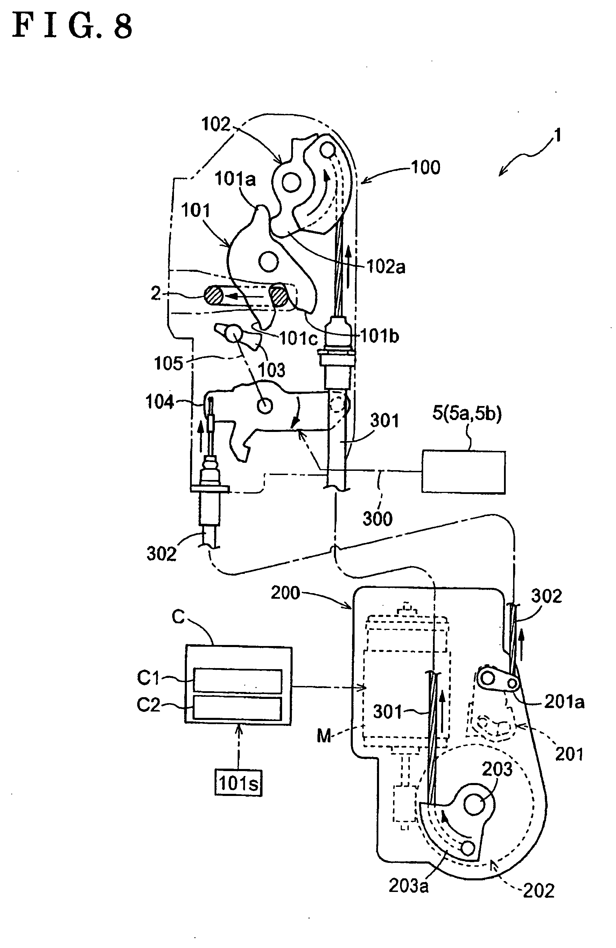

Fig.8 illustrates an explanation view indicating a relationship between the essential components of the door closing device in which a releasing operation begins;

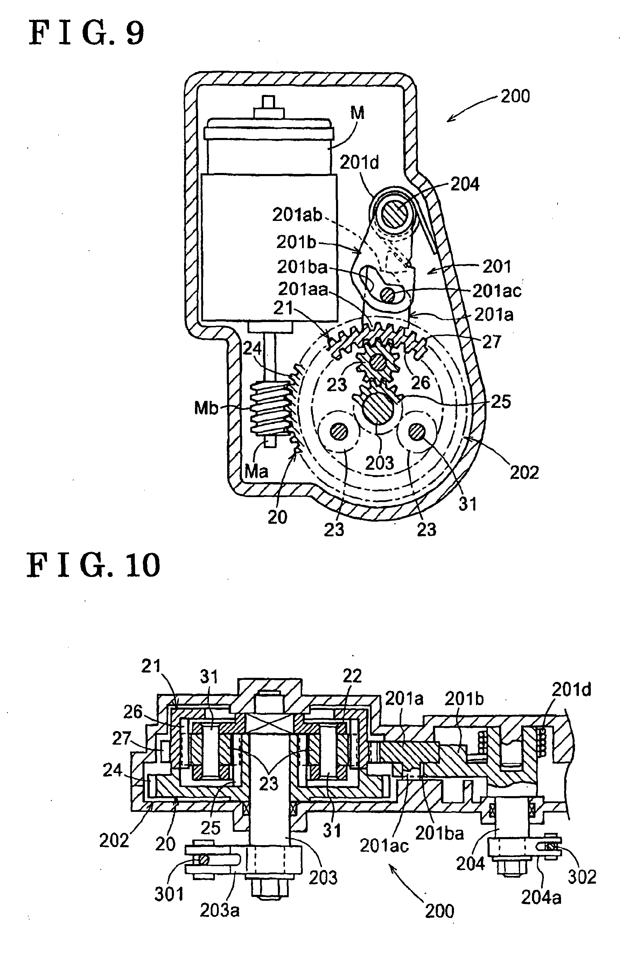

Fig.9 illustrates a flat view of a motor device in an output condition;
Fig.10 illustrates a vertical cross-sectional view indicating a condition of a planetary gears mechanism and a disconnecting mechanism in the output condition;

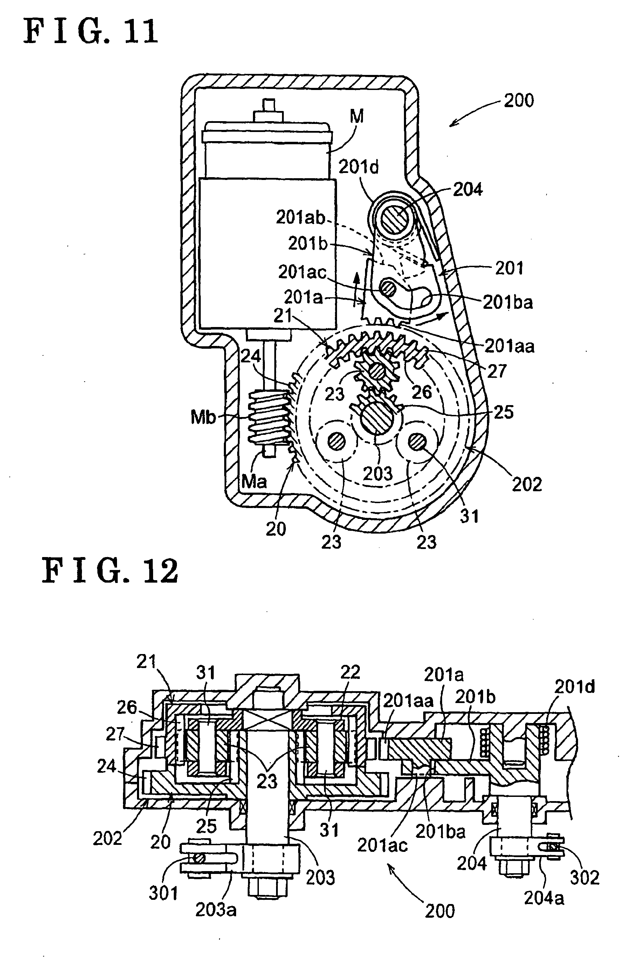

Fig.11 illustrates a flat view of the motor device in a non-output condition;
Fig.12 illustrates a vertical cross-sectional view indicating a condition of a planetary gears mechanism and a disconnecting mechanism in the non-output condition;
Fig. 13 illustrates an explanation view of the operation of the door closing device according to the current invention, and
Fig.14 illustrates an explanation view of the operation of a know door closing device.

### DETAILED DESCRIPTION OF THE INVENTION

A preferred embodiment of the present invention, a door closing device 1, will be described hereinbelow in detail with reference to the accompanying drawings.

### [Each component included at the door closing device]

As shown in Fig.1, 2 and 3, the door closing device 1 in the current invention includes a latch mechanism main unit 100 at which a striker 2 is intruded and maintained by a latch 101, a driving motor device 200 for providing a drive for rotating the latch 101, and an handle operation transmitting mechanism 300 for setting the operation of the latch mechanism main unit 100 and the driving motor device 200 in response to an operation of the handle 5 provided at a door 4.

The door closing device 1 also includes a controller C as a controlling device for outputting an operation related to a positive rotation or a reverse rotation of the motor M relative to the driving motor device 200 based on a predetermined require, as well as for monitoring the operating condition of the door closing device 1.

As describe later, the current invention is characterized by a configuration of the controller C. The controller C outputs the positive rotating operation at a predetermined time to the motor M based on a closing operation transmitted separately, then the motor M rotates in positive direction, as a result, the latch 101 is rotated from the half-latch corresponding condition thereof to the full-latch corresponding condition thereof.

The latch 101 changes its condition from a condition shown in Fig.5 to conditions shown in Fig.6 and Fig.7. In addition, when the door is opened by an operation of the handle 5, the latch 101 changes its condition from a condition shown in Fig.7 to a condition shown in Fig.8.

The door is closed manually at first, and basically, the door condition shown in Fig.3 is changed manually to the half-latched door condition. The conditions shown in Fig.5 are changed to the full-latched door condition shown in Fig.6 by an automatic closing operation. Furthermore, according to the current invention, the door condition shown in Fig.6 is changed to the condition shown in Fig7, and the latch 101 is maintained by the pawl 103.

### [Cooperation of each component]

As shown in Fig.2, Fig.5, Fig.6 and Fig.7, once the striker 2 is held in the latch mechanism main unit 100, the striker 2 is maintained at the half-latch corresponding position or the full-latch corresponding position by the latch 101. A drive for changing the condition of the latch lever 102 is transmitted from the motor device 200 to a latch mechanism main unit 100 through a closing cable 301 as a drive connecting mechanism.

On the other hand, a cancel cable 302 extends from the latch mechanism main unit 100 toward the motor device 200 for transmitting a stopping operation of the door closing operation and a door opening operation transmitted toward the latch mechanism main unit 100 in response to the opening operation of the door handle 5.

As also shown in Fig.2, Fig.3, Fig.5, Fig.6 and Fig.7, the handle operation transmitting mechanism 300 is provided at the latch mechanism main unit 100 for mechanically transmitting the opening operation from either one of a inside door handle 5a or an outside door handle 5b to the latch mechanism main unit 100.

The configuration of the each component, basically a configuration related to the current invention, will be explained hereinafter in detail. The condition of each component will be explained hereinafter comparing the half-latch corresponding condition thereof at which the striker 2 is in the half-latch corresponding position as shown in Fig.5 with the full-latch corresponding condition thereof at which the striker 2 is in the full-latch corresponding position as shown in Fig.6 and Fig.7.

### [Latch mechanism main unit]

As aforementioned above, the latch mechanism main unit 100 having a known latch structure includes the latch 101 relative to the striker 2, the latch lever 102 and the pawl 103 relative to the latch 101, and an open lever 104 relative to the pawl 103.

When the door is in the half-latch corresponding condition as shown in Fig.5, the striker 2 is in the half-latch corresponding position thereof, and the position of the latch 101 is determined by engaging with the striker 2, at this time, the latch 101 is in the half-latch corresponding condition. In this condition, the latch nail 101a provided at the latch 101 extends in the upper right direction and is rotatable by the rotation of the lever nail 102a provided at the latch lever 102.

On the other hand, the pawl 103 engages with a back engaging portion 101b of the latch 101 and limits the rotation of the latch 101 in the clockwise direction, not anticlockwise direction. As shown in Fig.4, a rotating angle of the latch 101 can be detected by a latch angle sensor 101s fixed at the back side of the latch 101 through a shaft by which the latch 101 is also fixed.

The closing cable 301 fixed around the upper rim of the latch lever 102 is pulled inside the latch mechanism main unit 100 as inside as it can be within the latch mechanism main unit 100, and the lever nail 102a is being the right side of the latch lever 102. The aforementioned condition is the waiting condition of the latch lever 102.

When the door is fully closed, the latch 101 is rotated in the anticlockwise direction from the condition shown in Fig.5, and the striker 2 becomes in the full-latch corresponding position, and the latch 101 also becomes the full-latch corresponding condition as shown in Fig.6 and 7.

The lever nail 102a of the latch lever 102 rotates in clockwise direction and pushes the latch 101, as a result the latch 101 rotates in anticlockwise direction, then the latch 101 is set in a condition shown in Fig.6 at which the anticlockwise rotation of the latch 101 is limited (rotation end condition). In this condition, the latch nail 101a of the latch 101 extends in upper direction. In the rotation end condition, the latch lever 102 engages with the latch 101, and a clearance is provided between the pawl 103 and the latch 101.

In this condition, the closing cable 301 provided around upper rim of the latch lever 102 is pulled out from the latch mechanism main unit 100, as a result, the latch lever 102 is set in a condition shown in Fig.6 in which the lever nail 102a extends in leftward direction.

As shown in Fig.7, the pawl 103 engages with the outer engaging portion 101c of the latch 101 in the rotating direction of the latch 101 and prevents the rotation of the latch 101 in clockwise direction, so that the latch 101 is maintained in the full-latch corresponding condition thereof. Thus, the latch 101 can not be restored toward the half-latch corresponding condition side unless the pawl 103 is not rotated in the clockwise direction. When the latch lever 102 is slightly restored by the operation of the closing cable 301, the latch 101 engages with the pawl 103 as shown in Fig.7.

The open lever 104 is provided relative to the pawl 103 for operating the cancel cable 302. The full-latch corresponding condition of the open lever 104 (same as the full-latch corresponding condition shown in Fig.5 and the condition shown in Fig.6) when the pawl 103 engages with the outer engaging portion 101c of the latch 101 to limit the rotation of the latch 101 in clockwise direction is shown in Fig.4, and the releasing condition of the open lever 104 when the pawl 103 disengages from the outer engaging portion 101c of the latch 101 is shown in Fig.8. Thus, the open lever 104 rotates at a predetermined angle in clockwise direction as shown in Fig.7 and Fig.8 when the pawl 103 disengages from the latch 101.

As shown in Fig.6, Fig.7 and Fig.8, the operation force is directly transmitted from the outside handle 5b and indirectly transmitted from the inside handle 5a into the open lever 104 through the handle operation transmitting mechanism 300.

Comparing Fig.8 to Fig.3,5,6 and 7, the open lever 104 is pulled down (the cancel cable 302 is pulled up) when the outside handle 5b is operated to open. On the other hand, the open lever 104 is also pulled down (the cancel cable 302 is pulled up) when the inside handle 5a is operated to open. As a result, the pawl 103 disengages from the outer engaging portion 101c of the latch 101.

The latch 101 is biased in clockwise direction in Fig.5, in other words, the latch 101 is biased in a direction from the full-latch corresponding condition thereof to the half-latch corresponding condition thereof. The pawl 103 is biased in anticlockwise direction in Fig.5, in other words, a direction in which the pawl 103 engages with the latch 101. In addition, the latch lever 102 is also biased in anticlockwise direction in Fig.5, in other words, the latch lever is biased in a direction that the latch lever 102 rotates form the rotation end condition to the waiting condition. When the closing cable 301 is pulled up, the latch lever 102 is rotated to the rotation limit thereof, then the latch lever 102 becomes the waiting condition. Further, the open lever 104 is also biased in anticlockwise direction in Fig.5, and the half-latch corresponding condition as shown in Fig.5 and the full-latch corresponding condition become the original conditions of the open lever 104. Each aforementioned component can be restored to the original conditions without holding means.

According to the aforementioned configuration, in the latch mechanism main unit 100, the latch lever 102 rotates in clockwise direction when the latch 101 is in the half-latch corresponding condition, and the closing cable 301 is pulled out, and the latch lever 102 rotates until the full-latch corresponding condition. The door 4 is fully closed when the latch 102 is slightly restored and the pawl 103 engages the outer engaging portion 101c of the latch 101.

On the other hand, in the latch mechanism main unit 100, when the outside handle 5a or the inside handle 5b are operated to open, the open lever 104 is rotated from the half-latch corresponding condition thereof or the full-latch corresponding condition thereof toward the releasing condition thereof, then the pawl 103 disengages from the latch 101, and the cancel cable 301 is pulled up.

According to the current invention, a chancel mechanism releases the maintained full-latch corresponding condition of the latch 101 in response to the opening operation of the door handle 5, at the same time, for releases the driving connection between an after-mentioned motor M and the latch lever 102. The front portion of the cancel mechanism includes a series of components from the handle 5 down the pawl 103. On the other hand, the back portion of the cancel mechanism includes a series of components from the open lever 104 down the cancel cable 302 including a disconnecting mechanism 201 provided within the motor device 200.

### [Motor device]

The motor device 200 basically transmits the deaccelerated motor output to the output shaft 203 through a planetary gears mechanism 202. The motor device 200 is switchable between the output condition in which the drive is transmitted and the non-output condition in which the drive is not transmitted. A flat view of the motor device 200 in output condition is shown in Fig.9, and longitudinal sectional views of the planetary gears mechanism 202 and the disconnecting mechanism 201 in the output condition are shown in Fig. 10. A flat view of the motor device 200 in the non-output condition is shown in Fig.11, and a longitudinal sectional view of the planetary gears mechanism 202 and the disconnecting mechanism 201 in the non-output condition are shown in Fig. 12.

In output condition, the latch lever 102 is rotated from the waiting condition thereof to the rotation end condition thereof or from the rotation end condition thereof to the waiting condition thereof by the positive rotation or the reverse rotation of the motor M.

The output condition and the non-output condition are switched by pulling-up or pulling-down the cancel cable.

A configuration of the motor device 200 will be explained based on Fig.9 and Fig.10. The motor device 200 includes the motor M, the output shaft 203, the planetary gears mechanism 202, a disconnecting mechanism shaft 204 and the disconnecting mechanism 201.

The output shaft 203 is connected to the closing cable 301 through the output lever 203a. The disconnecting mechanism 204 is connected to the cancel cable 302 through the cancel lever 204a. The cancel cable 302 or the closing cable 301 is pulled up or pulled down by the rotations of the output shaft 203 or the disconnecting mechanism shaft 204.

The motor M including a worm Mb at a output shaft Ma thereof can transmit the drive to a sun gear 20 of the planetary gears mechanism 202. The motor M rotates in the positive direction or the reverse direction under control of the controller C.

The planetary gears mechanism 202, as a deaccelerating gear mechanism, includes the sun gear 20, a ring gear 21 at which the rotation thereof is limited depending on the engaging or disengaging conditions relative to the disconnecting mechanism 201, and a carrier 22 as a output element. The carrier 2 rotates integrally with the revolution of the three planetary gears 23 and integrally with the rotation of the output shaft 203.

In the planetary gears mechanism 202, each planetary gear 23 is rotated by the drive transmitted from the motor M through the sun gear 20. When the ring gear 21 is engaged with the disconnecting mechanism 201 not to rotate (being in output condition), the planetary gears 23 engaging with the ring gear 21 is rotated by the drive from the motor M and also revolved around the output shaft 203. Then, the carrier 22 at which the planetary gears 23 is supported is rotated, as a result; the deaccerelated drive is transmitted from the output shaft 203. The output condition is shown in Fig.9 and Fig.10.

When the disconnecting mechanism 201 is moved, and the ring gear 21 disengages from the disconnecting mechanism 201, the drive of the motor M is not transmitted from the output shaft 203. The motor device 200 becomes non-output condition as shown in Fig. 11 and Fig. 12.

As shown in Fig.9 and Fig. 11, the aforementioned disconnecting mechanism 201 includes an outer teeth portion 27 provided at the outer peripheral surface of the ring gear 21, an engaging and disengaging block 201a being engagable and disengagable relative to the outer teeth portion 27, and a engaging operation member 201b for operating the engaging and disengaging block 201a by the opening operation of the door handle 5.

As shown in Fig.9 and Fig.11, the engaging and disengaging block 201a includes a teeth-shaped engaging portion 201aa being engagable with the outer teeth portion 27 of the ring gear 21 at the one end thereof, and engaging surface 201ab at the other end thereof. In addition, the engaging and disengaging block 201a includes a pin-shaped engaging portion 201ac at upper surface thereof (lower side in Fig.10 and Fig.12). The engaging and disengaging block 201a is movably guided in shaft direction of the rotating shaft of the ring gear 21,

The engaging and disengaging block 201a is fixed not to rotate when the teeth engaging portion 201aa engages with the outer teeth portion 27. The engaging and disengaging block 201a is released to rotate when the teeth engaging portion 201aa disengages from the outer teeth portion 27.

The engaging operation member 201b moves the engaging and disengaging block 201a in the shaft direction thereof. When the engaging operation member 201b is in the condition shown in Fig.9 and 11, the rotation of the ring gear 21 is limited, and when the engaging operation member 201b is in the condition shown in Fig.11 and Fig.12, he ring gear 21 is released to rotate. The engaging operation member 201b, including a cam groove 201ba engaging with the pin-shaped engaging portion 201ac, is biased by a spring 201 in clockwise direction in Fig.9 and Fig.11. The output condition as shown in Fig.9 and Fig.11 is the original condition. On the other hand, when the cancel cable 302 is pulled down and the engaging operation member 201b rotates in anti-clockwise direction as shown in Fig. 11, the engaging and disengaging block 201a is pulled up, and the engaging and disengaging block 201a disengages from the outer teeth portion 27 of the ring gear 21, then the ring gear 21 can rotate freely. As a result, the motor device 200 becomes the non-output condition.

### [Door controller]

According to the current invention, the controller C controls the door closing device 1 and basically controls the motor device 100 to rotate in the positive direction or the reverse direction. According to the current invention, the closing operation sends the striker 2 from the half-latch corresponding position thereof to the full-latch corresponding position thereof. Such closing operation will be explained as follows. Before the control is executed, the striker 2 is held near the latch 101 as shown in Fig. 3. When the striker 2 is held to the half-latch corresponding position thereof, the latch sensor 101s provided at the back side of the latch 101 detects the rotation angle of the latch 101. The detected angle is sent to the controller C, then the controller starts controlling.

As shown in Fig.3, Fig.5 and Fig.6, the controller C includes a first control means c1 controlling the motor M to rotate in the positive direction on the full-latch operation in which the striker 2 is held to the full-latch corresponding position, and a second control means c2 controlling the motor M to rotate in the reverse direction after the latch lever 102 is fully latched.

The rotating time of the motor M in the positive direction controlled by the first control means c1 equals to the total operation amount required to rotate the latch lever 102 from the waiting condition thereof to the rotation end condition thereof. On the other hand, the rotating time of the motor M in the reverse direction controlled by the second control means c2 is set to be smaller than the rotating time required to rotate the latch lever 102 from the waiting condition thereof to the rotation end condition thereof.

Specifically, the rotating time of the motor M in the reverse direction for slightly restoring the latch lever 102 toward the waiting condition side is set to be approximately 100ms, and the latch 101 is maintained by the pawl 103 at the full-latch condition by such operation.

The condition of the door closing device 1 and the operation of each controlling means will be serially explained in detail.
1. When the vehicle door 4 is in the half-lath condition as show in Fig.5, the each component will be as follows.

**[Table 1]**

| | |
|---|---|
| Striker | Half-latch corresponding position |
| Latch | Half-latch corresponding condition |
| Latch lever | Waiting condition |
| Pawl | Engaging with the back engaging portion |
| | of the latch |
| Open lever | Half-latch corresponding condition without pulling the cancel cable |
| Motor device | Output condition |

2. When the latch angle sensor 101s detects the half-latch door condition, the first control means c1 provided at the controller C controls the closing operation in aforementioned condition (refer to Fig.6).
At the moment when the closing operation begins, the motor device is maintained in the output condition, as a result, the latch lever 102 is rotated in clockwise direction in Fig.6 by the motor rotating operation at a predetermined time output by the first control means c1. Then the latch 101 is rotated in anti-clockwise direction, and the striker 2 is held to the full-latch corresponding position thereof.
3. After the striker is held to the full-latch corresponding position, the second control means c2 starts controlling (refer to Fig.7).
The second control means c2 outputs the reverse rotation operation to the motor M at a predetermined time. As aforementioned above, the predetermined time is set to be short, so that the latch lever 102 is not restored to the waiting condition, and the latch lever 102 is slightly rotated toward the waiting condition side. The rotation of the latch 101 to the waiting condition side is limited by engaging the pawl 103 with the outer engaging portion 101c of the latch 101.
In this condition, the closing operation has been finished, and the vehicle 3 can be driven.
The position or the condition of each component at this moment will be explained as follows.

**[Table 2]**

| | |
|---|---|
| Striker | Full-latch corresponding position |
| Latch | Full-latch corresponding condition |
| Latch lever | Slightly restored from the rotation finishing condition |
| Pawl | Engaging with the outer engaging portion of the latch |
| Open lever | Full-latch corresponding condition without pulling the cancel cable |
| Motor device | Output condition |

4. The door opening operation after the vehicle 3 arrives to a destination point will be explained as follows (refers to Fig.8).
First, the passenger operates, for example, the inside handle 5a to open the vehicle door. Then opening operation is transmitted to the open lever 104 provided at the latch mechanism main unit 100. The pawl 103 disengages from the lath 101 by the rotation of the open lever 104 in the predetermined direction, at the same time, the cancel lever 302 is pulled down.

Once the cancel lever is pulled down, the motor device 200 becomes non-output condition, as a result, the latch lever 102 becomes free from the motor device 20 and is restored to the waiting condition thereof. At the same time, the pawl 103 disengages from the latch 101, then the latch 101 is restored to the half-latch corresponding condition, as a result, the door becomes half-latch condition. The position or the condition of each component at this moment will be explained as follows.

**[Table 3]**

| | |
|---|---|
| Striker | Half-latch corresponding position |
| Latch | Half-latch corresponding condition |
| Latch lever | Waiting condition |
| Pawl | Disengaging from the latch |
| Open lever | The pawl disengages from the outer engaging portion of the latch, and the cancel cable is pulled. |
| Motor device | Non-output condition |

In this way, the door is closed from the half-latched condition, then the door is opened continuously by the handle operation. The motor rotation can be shortened after the striker is held in the latch device upon the door closing operation, as a result, unnecessary noise can be prevented, and the door is closed in comfortable manner.

The aforementioned operation is shown in Fig.13. A horizontal axis in Fig. 13 represents the time, and a vertical axis in Fig. 13 represents the rotating condition of the latch lever 102 and the relationship between the positive rotation and the reverse rotation of the motor M. The timings of the detecting the door half-latch condition and the next opening operation of the door handle are indicated along the horizontal axis, and the waiting condition and the rotation end condition of the latch lever 102 is shown along the vertical axis. The operation of the know door closing device is also show in Fig. 14 in the same manner as Fig.13. According to Fig.13 and Fig.14, the latch lever is in the intermediate condition between the waiting condition and the rotation end condition after the striker 2 is held in the latch mechanism main unit 100 to the full-latch corresponding position thereof and until the next door opening operation of the door handle 5 is executed.

In the embodiment of the current invention, the first control means c1 and the second control means c2 are provided at the controller C, however, the latch lever 102 may be slightly restored by mechanical means alternatively toward the waiting condition side.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.

In a door closing device, a cancel mechanism releasing a latch from the full-latch corresponding condition and disconnecting a latch lever from the driving source by an opening operation of a door handle, a first control means controlling the driving source generating a drive force in the positive direction while a full-latch operation engaging with a striker at the full-latch corresponding position thereof, and a second control means controlling the driving source to rotate in the reverse direction after the full-latch operation is finished by the latch lever, wherein the operation amount of the driving source in the reverse direction by the second control means is set to be smaller than the operation amount required to rotate the latch lever from the waiting condition thereof to the rotation end condition.

## Claims

1. A door closing device (1) comprising:
a latch (101) being rotatable between a half-latch condition thereof at which the latch (101) is engaging with a striker (2) at a position corresponding to the half-latch condition of the latch (101) and a full-latch condition thereof at which the latch (101) is engaging with the striker (2) at a position corresponding to the full-latch condition of the latch (101) , and biased toward the half-latch condition side thereof,
a latch lever (102) maintaining the latch (101) at the full-latch condition, being rotatable between a waiting condition thereof corresponding to the half-latch condition of the latch (101) and a rotation end condition thereof corresponding to the full-latch condition of the latch (101), biased toward the waiting condition side, and having a rotation limit at the waiting condition thereof on a waiting side;
a driving source (200) for generating a drive force in a positive or a reverse direction based on an operation from a control device;
a drive connecting mechanism (301) driven by the drive force of the driving source (200) for rotating the latch lever (102) from the waiting condition to the rotation end condition or from the rotation end condition to the waiting condition based on the direction of the driving source (200);
the latch (101) rotated from the half-latch condition thereof to the full-latch condition thereof by the rotation of the latch lever (102) from the waiting condition thereof to the rotation end condition thereof **characterized in that** the door closing device (1) further includes:
a cancel mechanism (201) releasing the latch (101) from the full-latch condition and disconnecting the latch lever (102) from the driving source (200) by an opening operation of a door handle;
a first control means (c1) controlling the driving source (200) generating the drive force in the positive direction while a full-latch operation engaging with the striker (2) at the position corresponding to the full-latch condition of the latch, and
a second control means (c2) controlling the driving source (200) to rotate in the reverse direction after the full-latch operation is finished by the latch lever (102), wherein the operation amount of the driving source (200) in the reverse direction by the second control means (c2) is set to be smaller than the operation amount required to rotate the latch lever (102) from the waiting condition thereof to the rotation end condition thereof.

2. A door closing device (1) according to claim 1, wherein a pawl (103) is provided for maintaining the latch (101) at the full-latch condition thereof by engaging with the latch (101), and the latch (101) engages with the pawl (103) and disengages from the latch lever (102) by the reverse rotation of the driving source (200) controlled by the second control means (c2).

3. A door closing device (1) comprising:
a latch (101) being rotatable between a half-latch condition thereof at which the latch (101) is engaging with a striker (2) at a position corresponding to the half-latch condition of the latch (101) and a full-latch condition thereof at which the latch (101) is engaging with the striker (2) at a position corresponding to the full-latch condition of the latch (101) , and biased toward the half-latch condition side thereof;
a latch lever (102) maintaining the latch (101) at the full-latch condition, being rotatable between a waiting condition thereof corresponding to the half-latch condition of the latch (101) and a rotation end condition thereof corresponding to the full-latch condition of the latch (101), biased toward the waiting condition side, and having a rotation limit at the waiting condition thereof on a waiting side;
a driving source (200) for generating a drive force in a positive or a reverse direction based on an operation from a control device;
a drive connecting mechanism (301) driven by the drive force of the driving source (200) for rotating the latch lever (102) from the waiting condition to the rotation end condition or from the rotation end condition to the waiting condition based on the direction of the driving source (200);
the latch (101) rotated from the half-latch condition thereof to the full-latch condition thereof by the rotation of the latch lever (102) from the waiting condition thereof to the rotation end condition thereof **characterized in that** the door closing device (1) further includes:
a cancel mechanism (201) releasing the latch (101) from the full-latch condition and disconnecting the latch lever (102) from the driving source (200) by an opening operation of a door handle, wherein the latch lever (102) is in an intermediate condition between the waiting condition and
the rotation end condition for a duration after the closing operation holding the striker (2) at the position corresponding to the full-latch condition of the latch (101) is finished until the next opening operation of the door handle.

4. A door closing device (1) according any of claim 1 through claim 3, wherein a planetary gear mechanism is provided between the driving source (200) and the latch lever (102) for transmitting the drive, and includes a gear rotated when the driving source (200) engages with the latch lever (102) by the cancel mechanism (201) and not rotated when the driving source (200) disengages from the latch lever (102) by the cancel mechanism (201).

5. A door closing device (1) according to claim 4, wherein the canceling mechanism includes a disconnecting mechanism engaging and disengaging relative to the planetary gear mechanism in response to the opening operation of the door handle.
